# FASCICULE DE BREVET EUROPEEN

(11) **EP 1 945 356 B1**
(45) Date de publication et mention de la délivrance du brevet: **26.09.2012**
(21) Numéro de dépôt: 06831250.3
(22) Date de dépôt: 29.09.2006
(51) Int. Cl.: B01J 35/04, C04B 38/00

(54) **METHODE D'OBTENTION D'UNE STRUCTURE DE FILTRATION HOMOGENE POUR UNE APPLICATION CATALYTIQUE**
VERFAHREN ZUM ERHALT EINER HOMOGENEN FILTERSTRUKTUR FÜR EINE KATALYTISCHE ANWENDUNG
METHOD FOR OBTAINING A HOMOGENEOUS FILTERING STRUCTURE FOR A CATALYTIC APPLICATION

(30) Priorité: 30.09.2005 FR 0552979
(43) Date de publication de la demande: 23.07.2008
(73) Titulaire: Saint-Gobain Centre de Recherches et d'Etudes Européen, 92400 Courbevoie (FR)
(72) Inventeur: ANDY, Patricia, F-84300 Les Taillades (FR); BARDON, Sébastien, F-75020 Paris (FR); GLEIZE, Vincent, Marc, F-84000 Avignon (FR)
(74) Mandataire: Colombier, Christian
(86) Numéro de dépôt international: PCT/FR2006/050963
(87) Numéro de publication internationale: WO 2007/039698

(56) Documents cités:
- EP-A- 1 338 322
- EP-A- 1 462 171
- EP-A- 1 491 249
- EP-A- 1 647 790
- WO-A-94/21900

## Description

L'invention se rapporte au domaine des filtres à particules notamment utilisés dans une ligne d'échappement d'un moteur pour l'élimination des suies produites par la combustion d'un carburant diesel dans un moteur à combustion interne. Plus précisément, l'invention porte sur une méthode d'obtention d'une structure filtrante utilisable comme filtre à particule, ladite structure étant particulièrement adaptée pour un dépôt homogène d'un matériau lui conférant en outre des propriétés catalytiques.

Les structures de filtration pour les suies contenues dans les gaz d'échappement de moteur à combustion interne sont bien connues de l'art antérieur. Ces structures présentent le plus souvent une structure en nid d'abeille, une des faces de la structure permettant l'admission des gaz d'échappement à filtrer et l'autre face l'évacuation des gaz d'échappement filtrés. La structure comporte, entre les faces d'admission et d'évacuation, un ensemble de conduits ou canaux adjacents d'axes parallèles entre eux séparés par des parois poreuses de filtration, lesquels conduits sont obturés à l'une ou l'autre de'leurs extrémités pour délimiter des chambres d'entrée s'ouvrant suivant la face d'admission et des chambres de sortie s'ouvrant suivant la face d'évacuation. Pour une bonne étanchéité, la partie périphérique de la structure est entourée d'un ciment de revêtement. Les canaux sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant. Le plus souvent, les corps filtrants sont en matière céramique poreuse, par exemple en cordiérite ou en carbure de silicium.

De façon connue, durant sa mise en oeuvre, le filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration. La structure poreuse est alors soumise à des contraintes thermiques et mécaniques intenses, qui peuvent entraîner des micro-fissurations susceptibles sur la durée d'entraîner une perte sévère des capacités de filtration de l'unité, voire sa désactivation complète. Ce phénomène est particulièrement observé sur des filtres monolithiques de grand diamètre.

Pour résoudre ces problèmes et augmenter la durée de vie des filtres, il a été proposé plus récemment des structures de filtration plus complexes, associant en un bloc filtrant plusieurs éléments monolithiques en nid d'abeille. Les éléments sont le plus souvent assemblés entre eux par collage au moyen d'un ciment de nature céramique, appelé dans la suite de la description ciment de joint ou ciment joint. Des exemples de telles structures filtrantes sont par exemple décrits dans les demandes de brevets EP 816 065, EP 1 142 619, EP 1 455 923 ou encore WO 2004/090294.

Les filtres ou structures de filtration poreuses des suies tels que précédemment décrites sont principalement utilisés à grande échelle dans les dispositifs de dépollution des gaz d'échappement d'un moteur thermique diesel.

En plus du problème de traitement des suies, la transformation des émissions polluantes en phase gazeuse (c'est à dire principalement les oxydes d'azote (NOₓ) ou de soufre (SOₓ) et le monoxyde de carbone (CO), voire les hydrocarbures imbrûlés) en des gaz moins nocifs (tels que l'azote gazeux (N₂) ou le dioxyde de carbone (CO₂)) nécessite un traitement catalytique supplémentaire.

Pour éliminer ces polluants gazeux, les filtres à particules actuels comprennent en outre un revêtement catalytique, déposé au moins à la surface des canaux et le plus souvent dans la porosité des parois. Selon les procédés classiquement utilisés, la structure brut en nid d'abeille est imprégnée par une solution comprenant le catalyseur ou un précurseur du catalyseur.

De tels procédés peuvent typiquement comporter une étape d'imprégnation par immersion soit dans une solution contenant un précurseur du catalyseur ou le catalyseur solubilisé dans l'eau (ou un autre solvant polaire), soit une suspension dans l'eau de particules catalytiques. Un exemple d'un tel procédé est décrit par le brevet US 5,866,210. Selon ce procédé, l'application à l'autre extrémité du filtre d'une dépression permet dans un deuxième temps la montée de la solution dans la structure et par suite le revêtement des parois internes de la structure en nid d'abeille. Alternativement mais plus rarement, l'étape d'imprégnation peut être réalisée en utilisant une solution contenant un solvant non polaire tels qu'une huile ou un hydrocarbure ou des tensioactifs.

Selon d'autres réalisations du procédé d'imprégnation des filtres en nid d'abeille, lesdites imprégnations peuvent être obtenues par pompage, par application d'un vide ou sous la pression du liquide comprenant la solution d'imprégnation, sur au moins une extrémité du monolithe. Le plus souvent les procédés décrits se caractérisent par une combinaison de ces différentes techniques, au cours d'étapes successives, l'étape finale permettant, par introduction d'air sous pression ou par aspiration, l'élimination de la solution en excès et/ou l'obtention d'une meilleure dispersion du catalyseur au sein du filtre. Un des buts essentiels recherché par la mise en oeuvre de ces procédés est l'obtention d'un revêtement uniforme du catalyseur sur, voire à l'intérieur d'au moins une partie des parois poreuses des canaux composant la partie interne de la structure et traversées par les gaz d'échappement.

De tels procédés, ainsi que les dispositifs pour leur mise en oeuvre, sont par exemple décrits dans les demandes de brevets ou brevets US 2003/044520, WO 2004/091786, US 6,149,973, US 6,627,257, US 6,478,874, US 5,866,210, US 4,609,563, US 4,550,034, US 6,599,570, US 4,208,454 ou encore US 5,422,138.

Un des principaux problèmes se posant au cours de cette étape d'imprégnation pour une structure assemblée telle que précédemment décrite est la détermination de la quantité exacte et nécessaire de catalyseur ou du précurseur de catalyseur devant être déposée à la surface et le plus souvent dans la porosité des parois de chaque élément constituant le filtre. Cette quantité ne doit ni être trop faible, auquel cas l'efficacité du traitement des gaz polluants est notablement altérée, ni trop élevée, pour éviter une augmentation trop importante de la perte de charge occasionnée dans la ligne d'échappement par le filtre et un surcoût sensible lié à l'emploi d'un excès de catalyseur à base de métaux précieux. Pour une efficacité maximale du filtre, il est de plus impératif que la répartition du catalyseur sur le filtre soit la plus homogène possible au sein d'un élément mais également d'un élément à un autre dans l'assemblage.

En outre, une répartition inhomogène du dépôt de catalyseur conduit à une moindre efficacité du traitement catalytique des gaz mais également, dans les zones du filtre où la concentration de catalyseur est plus faible, à un retard dans l'initialisation de la réaction de combustion des suies. On a maintenant découvert que ces zones accumulaient les suies et que leur présence entraîne, lors d'un fonctionnement du filtre caractérisé par des régénérations successives, des contraintes thermomécaniques fortes sur la totalité du volume du filtre, réduisant d'autant ses performances et sa durée de vie.

La demande de brevet EP 1,462,171 décrit ainsi un procédé visant à mesurer la quantité exacte de catalyseur pouvant être déposée sur une structure en nid d'abeille, le procédé comprenant pour chaque élément une étape initiale de détermination d'une valeur d'adsorption d'eau, ladite valeur étant ensuite imprimée par exemple au moyen d'un marqueur sur ledit élément, de telle façon qu'elle puisse être lue ultérieurement et servir de référence pour ajuster la quantité exacte de catalyseur à incorporer dans cet élément.

Un tel procédé nécessite cependant que les moyens de dépôt du revêtement catalytique soit continuellement adaptés et recalibrés en fonction de la valeur d'absorption d'eau lue et propre à chaque élément, ce qui entraîne une complexité, un surcoût et une durée accrus du procédé de dépôt.

Il existe ainsi un besoin non résolu d'une méthode d'obtention facilitée d'une structure de filtration homogène, c'est-à-dire apte à un dépôt homogène de catalyseur, c'est à dire dans laquelle il sera possible de déposer rapidement et sans manipulation supplémentaire un revêtement catalytique homogène et optimal au sein d'un élément, d'un élément à un autre dans la structure, voire sur toute une population de ladite structure. Une telle méthode fait l'objet de la présente invention.

Plus précisément, la présente invention se rapporté à une méthode d'obtention d'une structure filtrante homogène pour une application catalytique, utilisable comme filtre à particules dans une ligne d'échappement d'un moteur à combustion interne, ladite structure comprenant une pluralité d'éléments filtrants en nid d'abeilles et se caractérisant en ce que :
a) on détermine, dans une étape préalable, un critère d'homogénéité, caractéristique du matériau de support constituant lesdits éléments, en l'absence de revêtement catalytique,
b) on sélectionne les éléments pouvant entrer dans la constitution de la structure au moyen de ce critère d'homogénéité, de manière à obtenir une structure adaptée à un dépôt homogène, au sein d'un élément et d'un élément à un autre, d'un catalyseur de traitement des polluants en phase gazeuse.

Plus précisément, l'invention se rapporte à une méthode d'obtention d'une structure filtrante homogène pour une application catalytique, utilisable comme filtre à particules dans une ligne d'échappement d'un moteur à combustion interne, ladite structure comprenant une pluralité d'éléments filtrants en nid d'abeilles et se caractérisant en ce que :
a) on détermine, dans une étape préalable, un critère d'homogénéité caractéristique du matériau de support constituant lesdits éléments, en l'absence de revêtement catalytique, choisi dans le groupe constitué par la valeur moyenne d'absorption d'eau, ou la largeur à mi-hauteur du pic de distribution des pores,
b) on sélectionne et on trie les éléments entrant dans la constitution de ladite structure, au moyen de ce critère d'homogénéité,
c) on assemble lesdits éléments répondant audit critère d'homogénéité, de manière à obtenir une structure adaptée à un dépôt homogène, au sein d'un élément et d'un élément à un autre, d'un catalyseur de traitement des polluants en phase gazeuse.

La méthode peut comprendre en outre une étape d) dans laquelle on dépose dans une quantité appropriée ledit catalyseur, avant ou après l'étape d'assemblage, pour l'obtention au final d'un filtre catalytique homogène.

L'application d'un tel critère d'homogénéité peut permettre selon l'invention de garantir une homogénéité du dépôt catalytique au sein d'une population de filtres, par la sélection appropriée des éléments entrant dans la composition desdits filtres.

De manière préférée, le matériau de support est à base de carbure de SiC, c'est-à-dire qu'il comprend au moins 30% de SiC en masse, de préférence au moins 70%, de préférence encore au moins 98%.

Selon un premier mode possible de mise en oeuvre de la présente méthode, le critère d'homogénéité est mesuré par rapport à une variance ou un écart type mesuré à partir d'une valeur moyenne d'adsorption d'eau, caractéristique d'une population d'éléments.

Selon un second mode possible de mise en oeuvre de la présente méthode, le critère d'homogénéité est la largeur à mi-hauteur du pic de distribution de pores, mesurée par porosimétrie au mercure.

Le plus souvent, le critère d'homogénéité est déterminé en fonction d'un domaine de porosité et de préférence par référence à un domaine de diamètre médian des pores.

La méthode telle que précédemment décrite s'applique en particulier lorsque la porosité du matériau de support, est comprise entre 44 et 50% et son diamètre de pores médian est compris entre 10 et 18 µm, tel que par exemple un matériau à base de carbure de silicium recristallisé.

Dans ce cas les éléments sélectionnés présentent par exemple un écart type inférieur à 1%, par rapport à une valeur d'adsorption d'eau préalablement mesurée.

Selon une variante possible, les éléments sélectionnés présentent une largeur à mi-hauteur du pic de porosité, mesurée par porosimétrie au mercure, inférieure à 5 µm.

Plus généralement, la présente méthode peut notamment être utilisée pour la fabrication d'une structure filtrante homogène pour une application catalytique ou pour la fabrication d'un filtre catalytique dont le matériau de support présente une porosité comprise entre 30 et 70% et/ou un diamètre médian de pores compris entre 6 et 30 µm.

La présente invention se rapporte également à la structure filtrante homogène pour une application catalytique et au filtre catalytique selon les revendications 10 et 11.

L'invention sera mieux comprise à la lecture des exemples qui suivent, non limitatifs de l'invention sous aucun des aspects décrits et uniquement fournis pour permettre une meilleure compréhension de l'invention.

### Exemple 1 (comparatif):

On a synthétisé selon les techniques de l'art, par exemple décrites dans les brevets EP 816 065, EP 1 142 619, EP 1 455 923 ou encore WO 2004/090294, une première population de 100 éléments monolithiques en forme de nid d'abeille et en carbure de silicium.
Pour ce faire, on mélange dans un malaxeur :
- 3000 g d'un mélange de particules de carbure de silicium de pureté supérieure à 98% et présentant une granulométrie telle que 70% en masse des particules présente un diamètre supérieur à 10 micromètres, le diamètre médian de cette fraction granulométrique étant inférieur à 300 micromètres (au sens de la présente description, le diamètre médian désigne le diamètre des particules au dessous duquel se trouve 50% en masse de la population).
- 150 g d'un liant organique du type dérivé de cellulose.

On ajoute de l'eau et on malaxe jusqu'à obtenir une pâte homogène et dont la plasticité permet l'extrusion à travers une filière d'une structure en nid d'abeille dont les caractéristiques dimensionnelles sont données dans le tableau 1 _{:}

**Tableau 1**

| Géométrie des canaux et du monolithe | carrée |
|---|---|
| Densité de canaux | 180 cpsi (canaux par inch carré, 1 inch = 2,54 cm) |
| Epaisseur des parois | 350 µm |
| Longueur | 17,4 cm |
| Largeur | 3,6 cm |
| Masse | 1800 g |
| Porosité | Entre 44 et 50% |
| Diamètre médian de pores | Entre 10 et 18 µm |

On sèche ensuite les monolithes crus obtenus par micro-onde pendant un temps suffisant pour amener la teneur en eau non liée chimiquement à moins de 1% en masse.
On bouche alternativement les canaux de chaque face du monolithe selon des techniques bien connues, par exemple décrites dans la demande WO 2004/065088.
Les monolithes sont ensuite cuits jusqu'à une température d'au moins 2100°C qui est maintenue pendant 5 heures.

Une mesure d'absorption d'eau a été pratiquée individuellement sur l'ensemble des éléments monolithiques ainsi réalisés, selon les enseignements de la demande EP 1 462 171. L'écart type obtenu par rapport à la moyenne d'absorption d'eau est proche de 4%.

On a ensuite sélectionné au hasard parmi cette première population 16 éléments monolithiques.

Des analyses par porosimétrie à haute pression de mercure ont été effectués sur les autres éléments, au moyen d'un porosimètre du type micromeritics 95000®. Ces mesures montrent que la porosité des éléments varie entre 44% et 50% et le diamètre de pore médian varie entre 10 et 18 µm. La distribution des tailles de pore est du type unimodale pour tous les éléments, indépendamment de leur porosité ou de leur diamètre de pore médian. La moyenne de la largeur à mi-hauteur du pic de porosité mercure obtenue sur l'ensemble de ces éléments est de 6,1 µm.

On a ensuite procédé à l'assemblage des 16 éléments sélectionnés au hasard, pour obtenir une structure filtrante assemblée, selon les procédés bien connus décrits dans les demandes cités précédemment.

La structure assemblée obtenue est ensuite plongée dans un bain d'une solution aqueuse contenant les proportions appropriées d'un précurseur du Platine sous la forme H₂PtCl₆, et d'un précurseur de l'oxyde de cérium CeO₂ (sous la forme nitrate de cérium) et d'un précurseur de l'oxyde de zirconium ZrO₂ (sous la forme nitrate de zirconyle) selon les principes décrits dans la publication EP 1 338 322 A1. Le filtre est imprégné par la solution selon un mode de mise en oeuvre similaire à celui décrit dans le brevet US 5,866,210. Le filtre est ensuite séché à environ 150°C puis chauffé à une température d'environ 600°C.

Une régénération du filtre catalytique ainsi obtenu a été effectuée sur banc moteur, après avoir chargé ledit filtre par une masse limite en suie de 7 g/litre. Les conditions de régénération sont les suivantes : après une stabilisation à un régime moteur de 1700 tours/minute pour un couple de 95 Nm pendant 2 minutes, une post-injection d'hydrocarbures est réalisée pendant 10 minutes.

Le filtre neuf pèse 1800 g, après chargement en suie 1828 g et après régénération 1805 g.

Le filtre est récupéré et découpé en tranche. On observe de la suie imbrûlée plus particulièrement localisée dans certaines pièces unitaires (élément) du filtre.

Sur les 28 g de suie déposée dans le filtre, seulement 23g ont été brûlé. Sans que cela puisse être lié à une quelconque théorie, il est très vraisemblable qu'en raison de la faible quantité de catalyseur présente dans certaines zones du filtre (c'est-à-dire celles où l'on observe de la suie), les hydrocarbures injectés pour la régénération n'ont pas pu tous être oxydés en présence du catalyseur. Dans ces zones, là réaction exothermique n'a pas permis d'atteindre la température minimale nécessaire au brûlage des suies (550°C). Le filtre obtenu selon cet exemple, non homogène, accumulera donc progressivement des suies dans certaines zones lors d'un fonctionnement normal sur véhicule, ce qui entraînera des régénérations très sévères et impromptues, avec un exotherme important et la formation de fissures entraînant son inactivation progressive, voire un risque non négligeable de destruction du filtre.

### Exemple 2:

Une deuxième population de 100 éléments monolithiques a été dans un deuxième temps synthétisé dans les mêmes conditions que dans l'exemple 1.

Une mesure d'absorption d'eau a été pratiquée individuellement sur l'ensemble des éléments monolithiques composant cette deuxième population, selon les enseignements de la demande EP 1 462 171, avec un résultat identique à celui de l'exemple 1.

On a ensuite sélectionné parmi cette seconde population deux séries de 16 éléments monolithiques de telle façon que l'écart type obtenu par rapport à la moyenne d'absorption d'eau soit inférieur à 1% pour ces 32 éléments.

Les analyses par porosimétrie à haute pression de mercure effectuées sur les éléments restants montrent comme pour l'exemple 1 une porosité moyenne pour chaque élément comprise entre 44% et 50% pour un diamètre de pore moyen compris entre 10 et 18 µm, ainsi qu'une distribution des tailles de pore du type unimodale.

Les 16 éléments constituant la première série sont assemblés comme précédemment, pour obtenir une structure filtrante assemblée dont les caractéristiques structurales sont identiques à celles décrites dans le tableau 1.

La structure est ensuite imprégnée de catalyseur selon un mode opératoire identique à celui de l'exemple 1.

Une régénération du filtre sur banc moteur est effectuée avec une masse limite en suie de 7 g/L, selon un protocole expérimental identique à celui de l'exemple 1. Le filtre neuf pèse 1800 g, après chargement en suie 1828 g et après régénération 1801 g.

Le filtre régénéré est récupéré et découpé en tranche. On n'observe cette fois pas de suie dans les pièces unitaires du filtre. Le filtre est satisfaisant en terme d'homogénéité.

La moyenne de la largeur à mi-hauteur du pic de porosité obtenue sur la deuxième série de 16 éléments sélectionnés est de 3,7 µm.

## Revendications

1. Méthode d'obtention d'une structure filtrante homogène pour une application catalytique, utilisable comme filtre à particules dans une ligne d'échappement d'un moteur à combustion interne, ladite structure comprenant une pluralité d'éléments filtrants en nid d'abeilles et **se caractérisant en ce que** :
a) on détermine, dans une étape préalable, un critère d'homogénéité caractéristique du matériau de support constituant lesdits éléments, en l'absence de revêtement catalytique, ledit critère d'homogénéité étant choisi dans le groupe constitué par la valeur moyenne d'absorption d'eau, ou la largeur à mi-hauteur du pic de distribution des pores,
b) on sélectionne et on trie les éléments entrant dans la constitution de ladite structure, au moyen de ce critère d'homogénéité,
c) on assemble lesdits éléments répondant audit critère d'homogénéité, de manière à obtenir une structure adaptée à un dépôt homogène, au sein d'un élément et d'un élément à un autre, d'un catalyseur de traitement des polluants en phase gazeuse.

2. Méthode selon la revendication 1, comprenant en outre une étape d) dans laquelle on dépose dans une quantité appropriée, avant ou après l'étape d'assemblage, ledit catalyseur.

3. Méthode selon la revendication 1 ou 2, dans laquelle le matériau de support est à base de carbure de SiC, c'est-à-dire qu'il comprend au moins 30% de SiC en masse, de préférence au moins 70%, de préférence encore au moins 98%.

4. Méthode selon l'une des revendications précédentes, dans laquelle le critère d'homogénéité est mesuré par rapport à une variance ou un écart type mesuré à partir d'une valeur moyenne d'adsorption d'eau, caractéristique d'une population d'éléments.

5. Méthode selon l'une des revendications 1 à 3, dans laquelle le critère d'homogénéité est la largeur à mi-hauteur du pic de distribution de pores, mesurée par porosimétrie au mercure.

6. Méthode selon l'une des revendications précédentes, dans laquelle le critère d'homogénéité est déterminé en fonction d'un domaine de porosité et de préférence par référence à un domaine de diamètre médian des pores.

7. Méthode selon la revendication 6, dans laquelle la porosité du matériau de support est comprise entre 44 et 50% et son diamètre de pores médian est compris entre 10 et 18 µm.

8. Méthode selon la revendication 7, dans laquelle les éléments sélectionnés présentent un écart type inférieur à 1%, par rapport à une valeur d'adsorption d'eau préalablement mesurée.

9. Méthode selon la revendication 8, dans laquelle les éléments sélectionnés présentent une largeur à mi-hauteur du pic de porosité, mesurée par porosimétrie au mercure, inférieure à 5 µm.

10. Structure filtrante homogène pour une application catalytique susceptible d'être obtenue selon la méthode décrite dans la revendication 8 ou 9, dans laquelle la porosité du matériau de support est comprise entre 44 et 50% et son diamètre de pores médian est compris entre 10 et 18 µm et dans laquelle les éléments présentent un écart type inférieur à 1%, par rapport à une valeur moyenne d'adsorption d'eau, caractéristique d'une population d'éléments.

11. Filtre catalytique susceptible d'être obtenue selon la méthode décrite dans la revendication 8 ou 9, dans laquelle la porosité du matériau de support est comprise entre 44 et 50% et son diamètre de pores médian est compris entre 10 et 18 µm et dans laquelle les éléments présentent un écart type inférieur à 1%, par rapport à une valeur moyenne d'adsorption d'eau, caractéristique d'une population d'éléments.

## Claims

1. A method of obtaining a homogeneous filtering structure for a catalytic application, which can be used as a particulate filter in an internal combustion engine exhaust line, said structure comprising a plurality of honeycomb filter elements and being **characterized in that**:
a) a homogeneity criterion characteristic of the constituent support material of said elements, in the absence of a catalytic coating, is determined in a prior step, said criterion being chosen from the group formed by the average water absorption value or the mid-height width of the pore distribution peak;
b) the elements making up said structure are selected and sorted by means of this homogeneity criterion; and
c) said elements meeting said homogeneity criterion are assembled so as to obtain a structure suitable for homogeneous deposition, within an element and from one element to another, of a catalyst for treating the pollutants in gas phase.

2. The method as claimed in claim 1, which further includes a step d) in which said catalyst is deposited in an appropriate amount before or after the assembly step.

3. The method as claimed in claim 1 or 2, in which the support material is based on a SiC carbide, that is to say it comprises at least 30%, preferably at least 70% and even more preferably at least 98% SiC by weight.

4. The method as claimed in one of the preceding claims, in which the homogeneity criterion is measured relative to a variance or a standard deviation measured using a mean water adsorption value, characteristic of a population of elements.

5. The method as claimed in one of claims 1 to 3, in which the homogeneity criterion is the mid-height width of the pore distribution peak measured by mercury porosimetry.

6. The method as claimed in one of the preceding claims, in which the homogeneity criterion is determined as a function of a porosity range and preferably by reference to a median diameter range of the pores:

7. The method as claimed in claim 6, in which the porosity of the support material is between 44% and 50% and its median pore diameter is between 10 µm and 18 µm.

8. The method as claimed in claim 7, in which the selected elements have a standard deviation of less than 1%, relative to a water adsorption value measured beforehand.

9. The method as claimed in claim 9, in which the selected elements have a porosity peak mid-height width measured by mercury porosimetry of less than 5 µm.

10. A homogeneous filtering structure for a catalytic application, which can be obtained using the method described in claim 8 or 9, wherein the porosity of the support material is between 44% and 50% and its median pore diameter is between 10 µm and 18 µm and wherein the elements have a standard deviation of less than 1%, relative to a water adsorption mean value, characteristic of a population of elements.

11. A catalytic filter which can be obtained using the method described in claim 8 or 9, wherein the porosity of the support material is between 44% and 50% and its median pore diameter is between 10 µm and 18 µm and wherein said elements have a standard deviation of less than 1%, relative to a water adsorption mean value, characteristic of a population of elements.

## Patentansprüche

1. Verfahren zum Erhalt einer homogenen Filterstruktur für eine katalytische Anwendung, die als Partikelfilter in einer Auspuffanlage eines Verbrennungsmotors verwendbar ist, wobei die Struktur eine Vielzahl von wabenförmigen Filterelementen umfasst und **dadurch gekennzeichnet ist, dass**:
a) in einem vorhergehenden Schritt ein für das die Elemente bildende Trägermaterial kennzeichnendes Homogenitätskriterium bei nicht vorhandener katalytischer Beschichtung festgelegt wird, wobei das Homogenitätskriterium aus der Gruppe bestehend aus dem Wasseraufnahmemittelwert oder der Halbwertsbreite des Porenverteilungspeaks ausgewählt ist,
b) mittels dieses Homogenitätskriteriums die die Struktur bildenden Elemente ausgewählt und sortiert werden,
c) die Elemente, die das Homogenitätskriterium erfüllen, zusammengefügt werden, um eine Struktur zu erhalten, die für ein homogenes Abscheiden - innerhalb eines Elements und von einem Element zu einem anderen - eines Katalysators zur Behandlung der Schadstoffe in der Gasphase geeignet ist.

2. Verfahren nach Anspruch 1, ferner umfassend einen Schritt d), bei dem der Katalysator in einer geeigneten Menge, vor oder nach dem Schritt des Zusammenfügens, abgeschieden wird.

3. Verfahren nach Anspruch 1 oder 2, wobei das Trägermaterial auf der Basis von SiC-Karbid ist, das heißt, dass es wenigstens 30 Ma% SiC, vorzugsweise wenigstens 70 %, weiterhin vorzugsweise wenigstens 98 % umfasst.

4. Verfahren nach einem der vorstehenden Ansprüche, wobei das Homogenitätskriterium im Verhältnis zu einer Varianz oder einer Standardabweichung gemessen wird, die anhand eines Wasseraufnahmemittelwertes, der für eine Gesamtheit von Elementen kennzeichnend ist, gemessen wird.

5. Verfahren nach einem der Ansprüche 1 bis 3, wobei das Homogenitätskriterium die durch Quecksilberporosimetrie gemessene Halbwertsbreite des Porenverteilungspeaks ist.

6. Verfahren nach einem der vorstehenden Ansprüche, wobei das Homogenitätskriterium in Abhängigkeit eines Porositätsbereiches und vorzugsweise in Bezug auf einen Bereich mittleren Porendurchmessers bestimmt wird.

7. Verfahren nach Anspruch 6, wobei die Porosität des Trägermaterials zwischen 44 und 50 % beträgt und sein mittlerer Porendurchmesser zwischen 10 und 18 µm liegt.

8. Verfahren nach Anspruch 7, wobei die ausgewählten Elemente eine Standardabweichung von unter 1 % gegenüber einem zuvor gemessenen Wasseraufnahmewert aufweisen.

9. Verfahren nach Anspruch 8, wobei die ausgewählten Elemente eine Halbwertsbreite des Porositätspeaks, gemessen durch Quecksilberporosimetrie, von unter 5 µm aufweisen.

10. Homogene Filterstruktur für eine katalytische Anwendung, die geeignet ist, nach dem in Anspruch 8 oder 9 beschriebenen Verfahren erhalten zu werden, wobei die Porosität des Trägermaterials zwischen 44 und 50 % beträgt und sein mittlerer Porendurchmesser zwischen 10 und 18 µm liegt und wobei die Elemente eine Standardabweichung von unter 1 % gegenüber einem Wasseraufnahmemittelwert, der für eine Gesamtheit von Elementen kennzeichnend ist, aufweisen.

11. Katalytischer Filter, der geeignet ist, nach dem in Anspruch 8 oder 9 beschriebenen Verfahren erhalten zu werden, wobei die Porosität des Trägermaterials zwischen 44 und 50 % beträgt und sein mittlerer Porendurchmesser zwischen 10 und 18 µm liegt und wobei die Elemente eine Standardabweichung von unter 1 % gegenüber einem Wasseraufnahmemittelwert, der für eine Gesamtheit von Elementen kennzeichnend ist, aufweisen.
